# EUROPÄISCHE PATENTANMELDUNG

(11) **EP 2 974 596 A1**
(43) Veröffentlichungstag der Anmeldung: **20.01.2016**
(21) Anmeldenummer: 15176481.8
(22) Anmeldetag: 13.07.2015
(51) Int. Cl.: A01K 7/06

(54) **MOBILE TIERTRÄNKE, INSBESONDERE MOBILE VIEHTRÄNKE**

(30) Priorität: 18.07.2014 DE 202014103320 U
(71) Anmelder: Schulte-Althoff, Elisabeth, 45721 Haltern am See (DE); Schulte-Althoff, Benedikt, 45721 Haltern am See (DE)
(72) Erfinder: Schulte-Althoff, Elisabeth, 45721 Haltern am See (DE); Schulte-Althoff, Benedikt, 45721 Haltern am See (DE)
(74) Vertreter: Rohmann, Michael

(57) **Zusammenfassung**

Mobile Tiertränke, insbesondere mobile Viehtränke - mit einem Trinkbecken (1) zur Aufnahme von Trinkflüssigkeit, wobei die Tiertränke zumindest eine Flüssigkeitszuführung (2) und zumindest einen Flüssigkeitsauslass (3) aufweist. Der Flüssigkeitsauslass (3) ist mittels Druck, insbesondere mittels durch das Maul eines Tieres ausgeübten Druck für eine Flüssigkeitsausgabe betätigbar. Die Tränke ist mit einer Standeinrichtung (4) ausgestattet, wobei die Standeinrichtung (4) zumindest einen unterhalb des Trinkbeckens (1) angeordneten Standfuß (5) für das Aufstellen der Tränke auf einem Untergrund aufweist. Die Tränke und die Anordnung des Trinkbeckens (1) der Tränke sind mit der Maßgabe ausgelegt, dass ein Tier imstande ist, im liegenden Zustand Trinkflüssigkeit bzw. Wasser aus dem Trinkbecken (1) zu entnehmen.

## Beschreibung

Die Erfindung betrifft eine mobile Tiertränke, insbesondere eine mobile Viehtränke und vor allem eine mobile Großviehtränke, - mit einem Trinkbecken zur Aufnahme von Trinkflüssigkeit, insbesondere zur Aufnahme von Wasser, wobei die Tiertränke zumindest eine Flüssigkeitszuführung und zumindest einen Flüssigkeitsauslass aufweist. Das Trinkbecken der erfindungsgemäßen Tiertränke bzw. Viehtränke ist insbesondere für die Aufnahme von Wasser als Trinkflüssigkeit für die Tiere eingerichtet.

Tiertränken bzw. Viehtränken sind aus der Praxis in unterschiedlichen Ausführungsformen bekannt. So ist es insbesondere bekannt, die Trinkbecken solcher Tiertränken an den Wandungen von Stallungen zu fixieren. Dabei wird das Trinkbecken in der Regel so angeordnet, dass die Tiere bzw. das Vieh im stehenden Zustand die Trinkflüssigkeit problemlos aufnehmen können/kann. Das Trinkbecken der Tiertränke ist dann auf entsprechender vertikaler Höhe fixiert. Es ist auch bereits bekannt, dass eine solche Tiertränke einen Flüssigkeitsauslass aufweist, der mittels Druck, insbesondere mittels durch das Maul eines Tieres ausgeübten Druck, für eine Flüssigkeitsausgabe bzw. für eine Wasserausgabe betätigt wird. Die aus der Praxis bekannten Tiertränken bzw. Viehtränken haben sich grundsätzlich bewährt. Sie weisen jedoch den Nachteil auf, dass ein krankes und/oder verletztes oder anderweitig geschwächtes Tier nicht in der Lage ist, mühelos Trinkflüssigkeit aus dem Trinkbecken der Tiertränke zu entnehmen.

Demgegenüber liegt der Erfindung das technische Problem zugrunde, eine Tiertränke bzw. eine Viehtränke anzugeben, die es auch kranken und/oder verletzten oder anderweitig geschwächten Tieren erlaubt, problemlos Trinkflüssigkeit aus dem Trinkbecken zu entnehmen.

Zur Lösung dieses technischen Problems lehrt die Erfindung eine mobile Tiertränke, insbesondere eine mobile Viehtränke und vor allem eine mobile Großviehtränke, - mit einem Trinkbecken zur Aufnahme von Trinkflüssigkeit, insbesondere zur Aufnahme von Wasser, wobei die Tiertränke zumindest eine Flüssigkeitszuführung und zumindest einen Flüssigkeitsauslass aufweist, wobei der Flüssigkeitsauslass mittels Druck, insbesondere mittels durch das Maul bzw. durch die Schnauze eines Tieres ausgeübten Druck für eine Flüssigkeitsausgabe betätigbar ist, wobei die Tränke mit einer Standeinrichtung ausgestattet ist, wobei die Standeinrichtung zumindest einen unterhalb des Trinkbeckens angeordneten Standfuß für das Aufstellen der Tränke auf einen Untergrund bzw. auf den Boden/Erdboden aufweist und wobei insbesondere die Tränke und die Anordnung des Trinkbeckens der Tränke mit der Maßgabe ausgelegt ist/sind, dass ein Tier imstande ist, im liegenden Zustand problemlos Trinkflüssigkeit bzw. Wasser aus dem Trinkbecken zu entnehmen bzw. zu trinken. - Hier und nachfolgend wird anstelle des Begriffes Tiertränke/Viehtränke/Großviehtränke auch abgekürzt der Begriff Tränke benutzt.

Die erfindungsgemäße Tränke wird insbesondere so ausgelegt, dass sie für größere Tiere und vor allem für Rinder, Pferde, Schafe oder Tiere vergleichbarer Größe geeignet ist. Dabei kann es sich neben Haustieren auch um Zootiere oder dergleichen handeln. Die erfindungsgemäße Tränke wird insbesondere für Großvieh und vor allem für Rinder eingesetzt. Grundsätzlich eignet sich die erfindungsgemäße Tiertränke insbesondere für Tiere mit einem Stockmaß von 70 cm bis 180 cm. Es liegt im Rahmen der Erfindung, dass die Tränke und vor allem die Höhe des Trinkbeckens bzw. die Höhe des oberen Randes des Trinkbeckens so ausgelegt bzw. angeordnet wird, dass die Tiere in liegendem Zustand bequem Trinkflüssigkeit aus dem Trinkbecken der Tränke entnehmen können. Dabei kann es sich insbesondere um kranke und/oder verletzte und/oder anderweitig geschwächte Tiere handeln, die nicht in der Lage sind oder zumindest zeitweise nicht in der Lage sind, im stehenden Zustand zu trinken. - Der Erfindung liegt die Erkenntnis zugrunde, dass die erfindungsgemäße Tiertränke hier auf einfache und kostengünstige Weise Abhilfe schafft.

Erfindungsgemäß handelt es sich um eine mobile bzw. tragbare Tiertränke. Dabei liegt es im Rahmen der Erfindung, dass die erfindungsgemäße Tiertränke zumindest einen Traggriff zum Erfassen und Transportieren der Tränke durch eine Bedienungsperson aufweist. Zweckmäßigerweise ist der Traggriff im oberen Bereich bzw. an einem oberen Ende der Tränke angeordnet. Es empfiehlt sich, dass der Traggriff so ausgelegt wird, dass die Bedienungsperson die erfindungsgemäße Tiertränke mit einer Hand erfassen und transportieren kann. Zweckmäßigerweise beträgt das Gewicht der Tränke maximal 30 kg, vorzugsweise maximal 25 kg und bevorzugt maximal 20 kg, so dass die Tränke von einer Bedienungsperson problemlos erfasst und transportiert werden kann. Es liegt dabei im Rahmen der Erfindung, dass auch die äußeren Abmessungen der erfindungsgemäßen Tiertränke so ausgelegt werden, dass die Tränke mühelos von einer Bedienungsperson - vorzugsweise mit nur einer Hand - erfasst und transportiert werden kann.

Soweit hier und nachfolgend Begriffe wie unten/oben oder dergleichen verwendet werden, beziehen sich diese auf den aufgestellten Betriebszustand der erfindungsgemäßen mobilen Tiertränke. - Erfindungsgemäß ist der unterhalb des Trinkbeckens angeordnete Standfuß der Standeinrichtung für das Aufstellen der Tränke auf einem Untergrund bzw. auf dem Erdboden vorgesehen. Es liegt dabei im Rahmen der Erfindung, dass das gesamte Gewicht bzw. im Wesentlichen das gesamte Gewicht der Tränke auf diesem Standfuß ruht. Zweckmäßigerweise sind außer dem Standfuß keine weiteren Stabilisierungsmaßnahmen bzw. Fixierungsmaßnahmen für die erfindungsgemäße Tränke erforderlich. Insbesondere ist es nicht notwendig, die erfindungsgemäße Tränke an Zäunen, Wandungen oder dergleichen zu befestigen. - Nach besonders bevorzugter Ausführungsform der Erfindung ist im aufgestellten Zustand der erfindungsgemäßen Tränke die seitliche bzw. horizontale Ausdehnung des Standfußes größer als die seitliche bzw. horizontale Ausdehnung des Trinkbeckens. Zweckmäßigerweise ist die von dem Standfuß aufgespannte Fläche größer als die Fläche des Trinkbeckens bzw. die Fläche der Projektion des Trinkbeckens auf den Untergrund bzw. Erdboden. Es empfiehlt sich, dass der Standfuß über zumindest eine Seite, vorzugsweise über mehrere Seiten und besonders bevorzugt über alle Seiten des Trinkbeckens hervorragt bzw. herausragt. Eine besonders bevorzugte Ausführungsform der Erfindung ist dadurch gekennzeichnet, dass der Standfuß in Form eines Standringes oder in Form einer Standplatte oder in Form eines Standgitters ausgebildet ist. Es liegt im Rahmen der Erfindung, dass die Komponenten des Standringes in einer Ebene bzw. im Wesentlichen in einer Ebene angeordnet sind. Zweckmäßigerweise beträgt der maximale Durchmesser des Standringes 70 cm, vorzugsweise 60 cm und bevorzugt 50 cm. Empfohlenermaßen beträgt der minimale Durchmesser des Standringes 25 cm, vorzugsweise 30 cm und bevorzugt 35 cm. Es liegt im Rahmen der Erfindung, dass der Standfuß aus einem Metall bzw. im Wesentlichen aus einem Metall besteht. Grundsätzlich könnte der Standring aber auch aus anderen Materialien bestehen.

Fernerhin liegt es im Rahmen der Erfindung, dass der Standfuß und/oder der Schwerpunkt der Tränke mit der Maßgabe ausgelegt ist/sind, dass die Tränke eigenstabil bzw. im Wesentlichen eigenstabil auf dem Standfuß aufstehen kann bzw. ruhen kann und zwar insbesondere mit der Maßgabe, dass keine weiteren Fixierungsmaßnahmen für die erfindungsgemäße Tränke erforderlich sind. Von daher zeichnet sich die erfindungsgemäße Tiertränke als kompaktes und stabilitätsmäßig eigenständiges Bauteil aus.

Es empfiehlt sich, dass die Standeinrichtung der erfindungsgemäßen Tiertränke zumindest ein Stabilisierungselement aufweist, wobei das Stabilisierungselement einerseits an einer Seite bzw. an der Rückseite des Trinkbeckens fixiert ist und andererseits an dem Standfuß fixiert ist. Das Stabilisierungselement bildet somit ein Verbindungselement zwischen dem Trinkbecken und dem Standfuß der erfindungsgemäßen Tiertränke. Das Stabilisierungselement besteht zweckmäßigerweise aus einem Metall bzw. im Wesentlichen aus einem Metall. Gemäß einer bevorzugten Ausführungsform der Erfindung ist das Stabilisierungselement in Form zumindest einer Stabilisierungsplatte und/oder in Form von zumindest einer Stabilisierungsstrebe ausgebildet. Dabei kann das Stabilisierungselement an dem Trinkbecken und/oder an dem Standfuß angeschweißt sein und/oder mit Hilfe von Schrauben und/oder Bolzen und/oder dergleichen fixiert sein. Es empfiehlt sich, dass das Stabilisierungselement und insbesondere eine als Stabilisierungselement eingesetzte Stabilisierungsplatte abgerundete Ecken aufweist, so dass rechtwinklige bzw. scharfe Ecken möglichst vermieden werden. Auf diese Weise wird verhindert, dass sich die Tiere an Ecken der erfindungsgemäßen Tiertränke verletzen können.

Es hat sich bewährt, dass der Abstand der Oberkante des Trinkbeckens zum Untergrund bzw. zum Erdboden maximal 35 cm, vorzugsweise maximal 30 cm, bevorzugt maximal 25 cm und sehr bevorzugt maximal 20 cm beträgt. Dementsprechend wird auch der Abstand der Oberkante des Trinkbeckens zum Standfuß eingerichtet. Auf diese Weise wird gewährleistet, dass ein Tier mühelos im liegenden Zustand Trinkflüssigkeit aus dem Trinkbecken der erfindungsgemäßen Tränke entnehmen kann. Gemäß einer Ausführungsform der Erfindung beträgt der Abstand der Oberkante des Trinkbeckens zum Untergrund bzw. zum Erdboden 10 bis 30 cm, vorzugsweise 12 bis 25 cm. - Es liegt im Rahmen der Erfindung, dass die Seiten des Trinkbeckens zumindest bereichsweise und vorzugsweise vollständig unter Ausbildung von Rundungen in den Boden des Trinkbeckens übergehen. Dann ist die Innenoberfläche des Trinkbeckens im Wesentlichen abgerundet bzw. rund ausgebildet. Auch dadurch wird eine problemlose Entnahme von Trinkflüssigkeit für die liegenden Tiere gewährleistet. Zweckmäßigerweise beträgt die Tiefe des Trinkbeckens - von der Oberkante des Trinkbeckens bis zum Boden des Trinkbeckens gemessen - 7 bis 15 cm, vorzugsweise 8 bis 14 cm und bevorzugt 9 bis 12 cm.

Gemäß empfohlener Ausführungsform der Erfindung weist der Flüssigkeitsauslass der Tränke ein Schlauchstück oder ein Rohrstück sowie zumindest ein Auslassventil auf, wobei durch Druckbeaufschlagung des Schlauchstückes oder des Rohrstückes das Auslassventil betätigbar ist und Trinkflüssigkeit in das Trinkbecken ausgegeben bzw. ausgelassen wird. Dabei erfolgt die Druckbeaufschlagung auf das Schlauchstück oder Rohrstück zweckmäßigerweise mittels des Mauls bzw. der Schnauze eines Tieres. Diese Betätigung einer Tränke bzw. eines Trinkbeckens ist grundsätzlich bekannt. Sie hat sich aber insbesondere bei der erfindungsgemäßen Ausgestaltung der Tiertränke bewährt. - Es empfiehlt sich, dass die Flüssigkeitszuführung der Tränke eine Anschlusseinrichtung für eine Schlauchleitung oder für eine Rohrleitung zur Zuführung der Trinkflüssigkeit aufweist. Somit liegt es im Rahmen der Erfindung, dass nach Aufstellung der Tränke am gewünschten Aufstellungsort eine Schlauchleitung oder Rohrleitung an die Anschlusseinrichtung der Tränke angeschlossen wird und dann die Tränke über diese Schlauchleitung oder Rohrleitung mit der Trinkflüssigkeit bzw. mit Wasser versorgt wird. Bei dieser Ausgestaltung ist ein Trinkflüssigkeitsspeicher für die Tränke nicht erforderlich. Ein solcher Trinkflüssigkeitsspeicher würde das Gewicht der Tränke - zumindest bei großzügiger Ausgestaltung des Speichers - in nachteilhafter Weise beeinflussen. Grundsätzlich liegt es aber auch im Rahmen der Erfindung, dass ein solcher Trinkflüssigkeitsspeicher für die erfindungsgemäße Tiertränke vorgesehen sein kann.

Der Erfindung liegt die Erkenntnis zugrunde, dass sich die erfindungsgemäße Tiertränke in vorteilhafter Weise zur Trinkflüssigkeitsversorgung bzw. zur Wasserversorgung für liegende Tiere, insbesondere für liegende Rinder und dergleichen Tiere eignet. Es hat sich auch gezeigt, dass eine erfindungsgemäße Tiertränke von kranken und/oder verletzten und/oder anderweitig geschwächten liegenden Tieren problemlos angenommen und benutzt wird. Von besonderer Bedeutung ist dabei im Rahmen der Erfindung, das die erfindungsgemäße Tiertränke auf einfache Weise als mobile tragbare Tränke ausgebildet werden kann. Insoweit zeichnet sich die erfindungsgemäße Tiertränke im Hinblick auf ihre Verwendung und ihren Aufstellungsort durch Flexibilität und Variabilität aus. Im Übrigen kann die erfindungsgemäße Tiertränke unabhängig vom Untergrund und somit bodenunabhängig benutzt bzw. aufgestellt werden. Zu betonen ist weiterhin, dass die erfindungsgemäße Tiertränke mit einfachen, wenig aufwändigen und kostengünstigen Komponenten bzw. Maßnahmen realisiert werden kann. Grundsätzlich können handelsübliche Trinkbecken für eine erfindungsgemäße Tiertränke eingesetzt werden. Fernerhin können auch handelsübliche Schlauchsysteme oder Rohrleitungssysteme an eine erfindungsgemäße Tiertränke problemlos angeschlossen werden.

Nachfolgend wird die Erfindung anhand einer lediglich ein Ausführungsbeispiel darstellenden Zeichnung näher erläutert. Es zeigen in schematischer Darstellung:

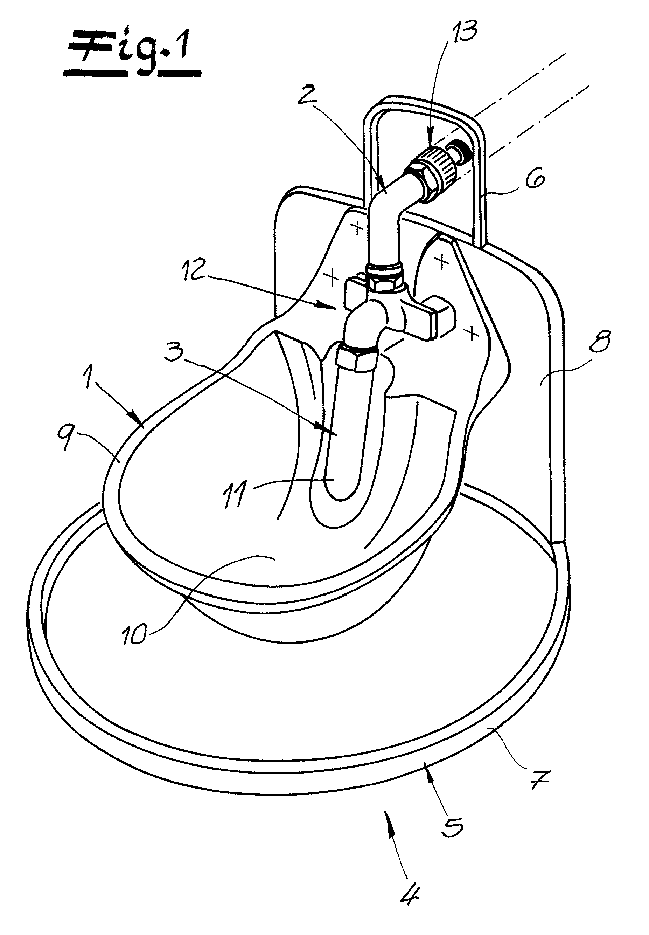

- **Fig. 1**: eine perspektivische Darstellung einer erfindungsgemäßen Tiertränke,

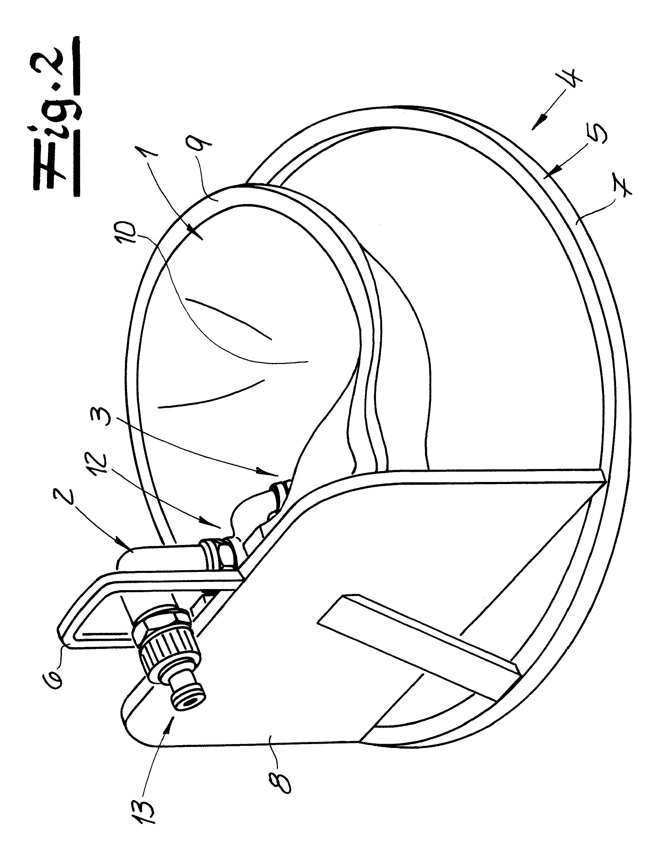

- **Fig. 2**: den Gegenstand nach Fig. 1 in einer anderen Ansicht und

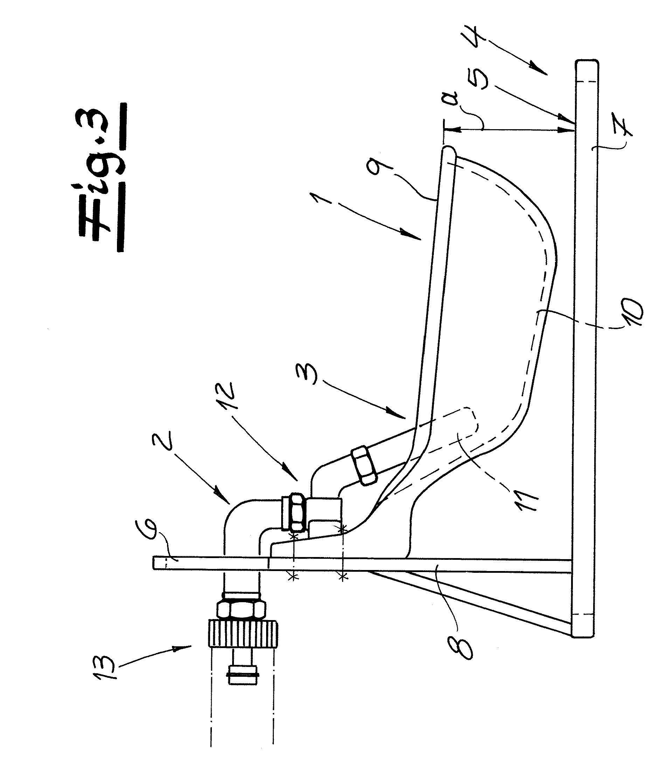

- **Fig. 3**: eine Seitenansicht einer erfindungsgemäßen Tiertränke.

Die Figuren zeigen eine erfindungsgemäße mobile Tiertränke bzw. mobile Viehtränke mit einem Trinkbecken 1 zur Aufnahme von Trinkflüssigkeit, wobei es sich bei der Trinkflüssigkeit insbesondere um Wasser handelt. Die erfindungsgemäße Tiertränke eignet sich vor allem für Tiere bzw. für Vieh mit einem Stockmaß von 70 cm bis 180 cm. Von besonderer Bedeutung ist im Rahmen der Erfindung der Einsatz der mobilen Tiertränke für Großvieh, insbesondere für Rinder und Tiere vergleichbarer Größe. Es liegt im Rahmen der Erfindung, dass die mobile Tiertränke von liegenden Tieren zum Trinken benutzt wird. Dabei handelt es sich vor allem um durch Krankheit und/oder Verletzung und/oder anderweitig geschwächte Tiere, insbesondere um geschwächte Rinder. Es liegt weiterhin im Rahmen der Erfindung, dass die Tiertränke eine Flüssigkeitszuführung 2 und einen Flüssigkeitsauslass 3 aufweist. Fernerhin ist die Tränke mit einer Standeinrichtung 4 ausgestattet, wobei diese Standeinrichtung 4 zweckmäßigerweise und im Ausführungsbeispiel einen unterhalb des Trinkbeckens 1 angeordneten Standfuß 5 für das Aufstellen der Tränke auf einem Untergrund bzw. auf dem Erdboden aufweist. Vorzugsweise und im Ausführungsbeispiel ist der Standfuß 5 über ein als Stabilisierungsplatte 8 ausgebildetes Stabilisierungselement mit dem Trinkbecken 1 verbunden. Dabei ist die Stabilisierungsplatte 8 nach einer Ausführungsform und im Ausführungsbeispiel durch Verschweißen an dem Standfuß 5 fixiert und ist beispielsweise mit Hilfe von Bolzen und/oder Schrauben an dem Trinkbecken 1 befestigt.

Von besonderer Bedeutung ist im Rahmen der Erfindung, dass die Tiertränke als mobile bzw. tragbare Tiertränke ausgebildet ist. Dazu weist bevorzugt und im Ausführungsbeispiel die Tiertränke einen Traggriff 6 zum Erfassen und Transportieren der Tränke durch eine Bedienungsperson auf. Der Traggriff 6 ist zweckmäßigerweise und im Ausführungsbeispiel am oberen Ende der Stabilisierungsplatte 8 befestigt. Damit eine Bedienungsperson die mobile Tränke ohne Probleme transportieren kann, beträgt das maximale Gewicht der Tränke bevorzugt 20 kg.

Damit die erfindungsgemäße Tiertränke eigenstabil und möglichst ohne weitere Fixierungsmaßnahmen auf dem Untergrund bzw. Erdboden aufstehen kann, ist der Standfuß 5 entsprechend ausgelegt. Vorzugsweise und im Ausführungsbeispiel ist die seitliche bzw. horizontale Ausdehnung des Standfußes 5 größer bemessen als die seitliche bzw. horizontale Ausdehnung des Trinkbeckens 1. Dabei ragt bevorzugt und im Ausführungsbeispiel der Standfuß 5 über alle Seiten des Trinkbeckens 1 nach außen vor. Empfohlenermaßen und im Ausführungsbeispiel ist der Standfuß 5 in Form eines Standringes 7 ausgebildet. Das Trinkbecken 1 befindet sich dabei zweckmäßigerweise und im Ausführungsbeispiel oberhalb des Standringes 7 und in der Projektion auf den Untergrund innerhalb des Standringes 7. Nach einer Ausführungsform und im Ausführungsbeispiel ist der Standring 7 kreisförmig bzw. im Wesentlichen kreisförmig ausgebildet. Es liegt im Rahmen der Erfindung, dass die Komponenten des Standfußes 5 bzw. des Standringes 7 innerhalb einer Ebene angeordnet sind. Der Durchmesser des Standringes 7 mag im Ausführungsbeispiel 50 cm betragen. Vorzugsweise und im Ausführungsbeispiel ist der maximale Durchmesser des Trinkbeckens 1 dagegen geringer bemessen. Der maximale Durchmesser des Standringes 7 beträgt zweckmäßigerweise 70 cm.

Es empfiehlt sich, dass zumindest der Standring 7 und die Stabilisierungsplatte 8 aus Metall bzw. im Wesentlichen aus Metall bestehen und vorzugsweise besteht auch der Traggriff 6 aus Metall bzw. im Wesentlichen aus Metall. Auch das Trinkbecken 1 ist empfohlenermaßen aus Metall bzw. im Wesentlichen aus Metall gefertigt. Grundsätzlich sind - insbesondere für das Trinkbecken 1 - aber auch andere Werkstoffe denkbar.

Es wurde bereits darauf hingewiesen, dass ein Kern der Erfindung darin liegt, dass ein liegendes Tier - vor allem ein krankes und/oder verletztes Tier - und vor allem ein liegendes Rind oder ein Tier vergleichbarer Größe die Tiertränke benutzen kann und entsprechend Trinkflüssigkeit bzw. Wasser aus der Tiertränke entnehmen kann. Dazu ist bevorzugt und im Ausführungsbeispiel die Höhe des Trinkbeckens 1 entsprechend bemessen. Nach bevorzugter Ausführungsform und im Ausführungsbeispiel beträgt der Abstand a der Oberkante 9 des Trinkbeckens 1 zum Untergrund bzw. zum Erdboden maximal 35 cm, vorzugsweise maximal 30 cm und bevorzugt maximal 25 cm. Die Standeinrichtung 4 bzw. der Standfuß 5 ist/sind dabei so bemessen, dass die Tiertränke mit dem Trinkbecken 1 in dieser Höhe eigenstabil und möglichst ohne weitere Fixierungsmaßnahmen auf dem Untergrund aufstehen kann. Die Tiertränke ist in vorteilhafter Weise im Wesentlichen von der Art des Untergrundes bzw. Erdbodens unabhängig und kann grundsätzlich auf jedem Untergrund bzw. Erdboden aufgestellt werden. Das gilt beispielsweise auch für mit Stroh oder dergleichen ausgelegte Ställe.

In den Figuren ist erkennbar, dass empfohlenermaßen und im Ausführungsbeispiel die Seiten des Trinkbeckens 1 unter Ausbildung von Rundungen in den Boden 10 des Trinkbeckens 1 übergehen. Somit ist die Innenoberfläche des Trinkbeckens 1 abgerundet bzw. rund ausgebildet. Auch dadurch ist für das Tier bzw. für das liegende Tier ein problemloses bzw. müheloses Trinken aus der Tiertränke möglich. In den Figuren ist weiterhin erkennbar, dass die Ecken der Stabilisierungsplatte 8 und des Traggriffes 6 abgerundet ausgebildet sind, so dass sich hier keine Verletzungsstellen für die Tiere ergeben.

Der Flüssigkeitsauslass 3 der Tiertränke weist bevorzugt und im Ausführungsbeispiel ein Schlauchstück 11 auf sowie ein Auslassventil 12. Durch Druckbeaufschlagung des Schlauchstückes 11 - insbesondere mittels des Mauls eines Tieres - wird das Auslassventil 12 betätigt und dadurch wird Trinkflüssigkeit bzw. Wasser in das Trinkbecken 1 ausgegeben/ausgelassen. Bevorzugt und im Ausführungsbeispiel weist die Flüssigkeitszuführung 2 der Tiertränke 1 eine Anschlusseinrichtung 13 für eine Schlauchleitung bzw. Rohrleitung zur Zuführung von Trinkflüssigkeit auf. Dabei kann es sich um einen Standard-Anschluss für eine Schlauchleitung bzw. Rohrleitung handeln. Die Tiertränke kann somit quasi an jedem Ort an eine Trinkflüssigkeitsversorgung bzw. Wasserversorgung angeschlossen werden, solange eine entsprechende Schlauchleitung bzw. Rohrleitung zur Verfügung steht. Bei dieser bevorzugten Ausführungsform ist ein Trinkflüssigkeitsspeicher - der das Gewicht der mobilen Tiertränke erhöhen würde - nicht erforderlich. Grundsätzlich könnte aber auch ein solcher Trinkflüssigkeitsspeicher für die erfindungsgemäße Tiertränke vorgesehen werden.

## Patentansprüche

1. Mobile Tiertränke, insbesondere mobile Viehtränke, vorzugsweise mobile Großviehtränke, - mit einem Trinkbecken (1) zur Aufnahme von Trinkflüssigkeit, insbesondere zur Aufnahme von Wasser, wobei die Tiertränke zumindest eine Flüssigkeitszuführung (2) und zumindest einen Flüssigkeitsauslass (3) aufweist, wobei der Flüssigkeitsauslass (3) mittels Druck, insbesondere mittels durch das Maul eines Tieres ausgeübten Druck für eine Flüssigkeitsausgabe betätigbar ist, wobei die Tränke mit einer Standeinrichtung (4) ausgestattet ist, wobei die Standeinrichtung (4) zumindest einen unterhalb des Trinkbeckens (1) angeordneten Standfuß (5) für das Aufstellen der Tränke auf einem Untergrund bzw. auf dem Erdboden aufweist und wobei insbesondere die Tränke und die Anordnung des Trinkbeckens (1) der Tränke mit der Maßgabe ausgelegt ist/sind, dass ein Tier imstande ist, im liegenden Zustand Trinkflüssigkeit bzw. Wasser aus dem Trinkbecken (1) zu entnehmen.

2. Mobile Tiertränke nach Anspruch 1, wobei die Tiertränke zumindest einen Traggriff (6) zum Erfassen und Transportieren der Tränke durch eine Bedienungsperson aufweist.

3. Mobile Tiertränke nach einem der Ansprüche 1 oder 2, wobei der Traggriff (6) im oberen Bereich bzw. an einem oberen Ende der Tränke angeordnet ist.

4. Mobile Tiertränke nach einem der Ansprüche 1 bis 3, wobei das Gewicht der Tränke maximal 30 kg beträgt, so dass die Tränke von einer Bedienungsperson problemlos erfassbar und transportierbar ist.

5. Mobile Tiertränke nach einem der Ansprüche 1 bis 4, wobei die seitliche bzw. horizontale Ausdehnung des Standfußes (5) größer ist als die seitliche bzw. horizontale Ausdehnung des Trinkbeckens (1).

6. Mobile Tiertränke nach einem der Ansprüche 1 bis 5, wobei der Standfuß (5) über zumindest eine Seite, vorzugsweise über mehrere Seiten und bevorzugt über alle Seiten des Trinkbeckens (1) herausragt.

7. Mobile Tiertränke nach einem der Ansprüche 1 bis 6, wobei der Standfuß (5) in Form eines Standringes (7) oder in Form einer Standplatte oder in Form eines Standgitters ausgebildet ist.

8. Mobile Tiertränke nach einem der Ansprüche 1 bis 7, wobei die Standeinrichtung (4) fernerhin zumindest ein Stabilisierungselement aufweist, welches Stabilisierungselement einerseits an einer Seite bzw. an der Rückseite des Trinkbeckens (1) fixiert ist und andererseits an dem Standfuß (5) fixiert ist.

9. Mobile Tiertränke nach einem der Ansprüche 1 bis 8, wobei das Stabilisierungselement in Form zumindest einer Stabilisierungsplatte (8) und/oder in Form von zumindest einer Stabilisierungsstrebe ausgebildet ist.

10. Mobile Tiertränke nach einem der Ansprüche 1 bis 9, wobei der Abstand a der Oberkante (9) des Trinkbeckens (1) zum Untergrund hin maximal 35 cm, vorzugsweise maximal 30 cm und bevorzugt maximal 25 cm beträgt.

11. Mobile Tiertränke nach einem der Ansprüche 1 bis 10, wobei die Seiten des Trinkbeckens (1) zumindest bereichsweise unter Ausbildung von Rundungen in den Boden (10) des Trinkbeckens (1) übergehen.

12. Mobile Tiertränke nach einem der Ansprüche 1 bis 11, wobei der Flüssigkeitsauslass (3) ein Schlauchstück (11) oder ein Rohrstück sowie zumindest ein Auslassventil (12) aufweist, wobei durch Druckbeaufschlagung des Schlauchstückes (11) oder Rohrstückes das Auslassventil (12) betätigbar ist und Trinkflüssigkeit bzw. Wasser in das Trinkbecken (1) ausgegeben bzw. ausgelassen wird.

13. Mobile Tiertränke nach einem der Ansprüche 1 bis 12, wobei die Flüssigkeitszuführung (2) eine Anschlusseinrichtung (13) für eine Schlauchleitung oder für eine Rohrleitung zur Zuführung der Trinkflüssigkeit aufweist.
